# DEMANDE DE BREVET EUROPEEN

(11) **EP 4 813 783 A1**
(43) Date de publication de la demande: **30.09.2026**
(21) Numéro de dépôt: 26168213.2
(22) Date de dépôt: 26.03.2026
(51) Int. Cl.: B60W 40/068

(54) **PROCÉDÉ DE CARACTÉRISATION DU COEFFICIENT DE FRICTION MOBILISABLE PAR UN VÉHICULE AUTOMOBILE UTILISANT L'ENTROPIE DU GLISSEMENT DE VITESSE INTER ESSIEUX**

(30) Priorité: 26.03.2025 FR 2503091
(71) Demandeur: AMPERE s.a.s., 92100 Boulougne-Billancourt (FR)
(72) Inventeur: AMEYOE, Ablamvi, 78084 Guyancourt cedex (FR); MOUTON, Xavier, 78084 Guyancourt cedex (FR)
(74) Mandataire: Renault Group

(57) **Abrégé**

La présente invention porte sur un procédé de caractérisation du coefficient de friction mobilisable par un véhicule automobile, le procédé comprenant :
- une étape (201) de calcul d'un glissement de vitesse inter-essieux ***g_{IE}*** du véhicule,
- des étapes (221, 222) de calcul de l'entropie ***Hₚ*** dudit glissement de vitesse inter-essieux du véhicule et d'un ou plusieurs indicateurs représentatifs de l'état du contact entre au moins un pneumatique du véhicule et la chaussée,
- une étape (203) de classification du coefficient de friction mobilisable par un algorithme de classification à apprentissage automatique entrainé prenant comme entrées ledit indicateur et ladite entropie ***Hₚ,***
- une étape (204) d'utilisation de la classe de coefficient de friction mobilisable par le véhicule automobile calculée par un système d'aide à la conduite du véhicule automobile.

L'invention porte également sur un véhicule configuré pour implémenter le procédé décrit.

## Description

### Domaine technique

L'invention se situe dans le domaine des véhicules automobiles pris au sens large (c'est-à-dire les véhicules particuliers, fourgonnettes, camions, véhicules de sport, électriques ou non, autonomes ou non), et porte plus particulièrement sur un procédé de caractérisation du coefficient de friction mobilisable par un tel véhicule automobile à partir des informations relatives au glissement de vitesse inter-essieux. Le coefficient de friction mobilisable estimé peut être ensuite utilisé par les différents traitements d'aide à la conduite mis en œuvre sur le véhicule.

### Technique antérieure

Les véhicules automobiles sont aujourd'hui équipés de dispositifs d'assistance à la conduite avancés, ADAS (acronyme anglais pour *« Advanced Driver Assistance Systems »),* de plus en plus performants. Ces ADAS ont notamment pour objectif d'améliorer la sécurité et l'efficacité des déplacements, en agissant sur les différents actionneurs du véhicule.

En effet, les véhicules modernes peuvent être vus comme des systèmes multi-actionneurs (en anglais *« overactuated systems »)* dans lesquels différents actionneurs peuvent être employés pour réaliser la même action, dans le but d'améliorer les prestations confort ou sécurité. Chaque actionneur a son domaine de fonctionnement, dans lequel il est optimal pour atteindre les meilleures performances. Par exemple, pour le contrôle latéral du véhicule, les actionneurs de freinage différentiel sont très performants lorsque la chaussée présente une faible adhérence, car la capacité d'auto-alignement des roues (qui caractérise la tendance qu'ont les roues à revenir seules en direction de l'axe longitudinal du véhicule) est faible. A l'inverse, les actionneurs de braquage des roues sont plus efficaces lorsque la chaussée présente une forte adhérence, car la capacité d'auto-alignement des roues est forte.

Afin d'utiliser les actionneurs les plus adaptés à chaque situation, il est nécessaire que les ADAS disposent d'un maximum d'informations relatives au fonctionnement du véhicule. Une de ces informations est la valeur maximum du coefficient de friction pneu-chaussée mobilisable par le véhicule, c'est-à-dire l'image de la force maximale, longitudinale ou latérale, que les pneus peuvent générer sur la route sans sortir de la limite d'adhérence. Ce coefficient est aussi appelé ellipse de friction des pneumatiques. Ce coefficient de friction mobilisable est fonction de l'adhérence de la chaussée et de caractéristiques intrinsèques au véhicule, comme par exemple le type de pneumatiques et leur état, mais également d'autres facteurs tels que les conditions météorologiques, la pression des pneus, la dynamique de conduite du véhicule, etc.

La connaissance du coefficient de friction pneu-chaussée mobilisable (ou potentiel, ou maximal) peut être utilisée par exemple pour sélectionner les actionneurs les plus adaptés dans le cadre du contrôle latéral ou longitudinal du véhicule, pour régler des distances de sécurité, etc...

Dans l'état de l'art, la plupart des travaux visant à estimer le coefficient de friction utilisent deux grandes approches :
- les approches dites « directes », qui nécessitent l'utilisation de capteurs supplémentaires, par exemple des capteurs acoustiques fixés au châssis aux environs des roues pour mesurer le bruit produit par le contact pneu-chaussée, ou des capteurs de vision (caméras) qui capturent les images de la route à des fins de classification ;
- les approches dites « indirectes », qui se basent elles sur l'observation des effets de l'adhérence pneu-chaussée sur la dynamique du véhicule. Elles utilisent principalement des informations relatives à la dynamique longitudinale du véhicule et au glissement des roues.

Les approches directes présentent un surcoût lié à l'installation de capteurs dédiés. On notera qu'aujourd'hui, les véhicules s'équipent de plus en plus de capteurs permettant de classifier l'état d'adhérence de la route pour les fonctions de contrôle anti-bruit ou les fonctions ADAS. Cependant, ces solutions ne tiennent pas compte de la dynamique du véhicule (c'est-à-dire la façon dont le véhicule se déplace sur la route et de la manière dont il répond aux forces et aux mouvements qui agissent sur lui) et de l'état des pneumatiques.

Les approches indirectes pallient le problème du coût supplémentaire en n'utilisant que les informations disponibles sur le bus CAN (de l'anglais *« Controller Area Network »,* bus système série utilisé dans les véhicules modernes pour permettre aux différents contrôleurs et capteurs du véhicule d'échanger des données). Néanmoins, leur temps de réponse dépend fortement de la dynamique de conduite du véhicule.

Parmi les approches indirectes, on connait par exemple le brevet US 7751961 B2, qui estime le coefficient de friction mobilisable par un véhicule en réalisant des accélérations et décélérations intentionnelles du véhicule pour générer de la dynamique. Ces accélérations et décélérations permettent d'obtenir les excitations ou dynamiques longitudinales du véhicule nécessaires pour estimer le coefficient de friction. Cette manière de procéder est avantageuse, car le moteur est sollicité pour créer de la dynamique longitudinale à un niveau modéré même en absence d'excitation de la part du conducteur, notamment dans le cas d'une conduite à faible dynamique. Cependant, le niveau d'une telle demande d'excitation, s'il n'est pas bien maitrisé, peut être intrusif ou perturbant pour le conducteur et les passagers. Cette méthode entraine également une augmentation de la charge de calcul des lois de commande utilisées pour réguler par exemple la vitesse à une référence donnée, notamment dans le cas où la régulation de vitesse (ACC pour *« Adaptive Cruise Control* ») est activée, et une augmentation de la consommation d'énergie.

Un but de l'invention est donc de définir une méthode permettant de caractériser le coefficient de friction pneu-chaussée mobilisable par le véhicule automobile, utilisable pour piloter les lois de commande du véhicule, selon une approche indirecte indépendante de la dynamique longitudinale du véhicule (c'est-à-dire fonctionnant en l'absence de forte accélération ou freinage).

### Résumé de l'invention

A cet effet, la présente invention décrit un procédé de caractérisation du coefficient de friction mobilisable par un véhicule automobile. Le procédé comprend :
- une étape de calcul d'un glissement de vitesse inter-essieux *g_{IE}* du véhicule,
- une étape de calcul de l'entropie *Hₚ* du glissement de vitesse inter-essieux *g_{IE},*
- une étape de calcul d'un ou plusieurs indicateurs représentatifs d'état du contact entre un ou plusieurs pneumatiques du véhicule et la chaussée,
- une étape de classification du coefficient de friction mobilisable par le véhicule automobile parmi un ensemble fini de classes de coefficients de friction mobilisables. Cette étape est réalisée par la mise en œuvre d'un algorithme de classification à apprentissage automatique entrainé à cet effet prenant comme entrées l'entropie *Hₚ* du glissement de vitesse inter-essieux *g_{IE}* du véhicule, et le ou les indicateurs représentatifs de l'état du contact entre au moins un pneumatique du véhicule et la chaussée,
- une étape d'utilisation de la classe de coefficient de friction mobilisable par le véhicule automobile calculée lors de l'étape précédente par un système d'aide à la conduite du véhicule automobile.

Selon un mode de réalisation particulier du procédé selon l'invention, l'étape de calcul d'un glissement de vitesse inter-essieux *g_{IE}* du véhicule comprend :
- une sous-étape de calcul d'une vitesse longitudinale d'un premier essieu du véhicule,
- une sous-étape de calcul d'une vitesse longitudinale d'un deuxième essieu du véhicule,
- une sous-étape de calcul du glissement de vitesse inter-essieux *g_{IE}* en calculant la différence entre les vitesses longitudinales du premier et du deuxième essieu du véhicule.

Selon différents modes de réalisation de l'invention, au moins un du ou des indicateurs représentatifs de l'état du contact pneu/chaussée du véhicule est choisi parmi :
- la moyenne du glissement de vitesse inter-essieux *g_{IE}* du véhicule *g_{IE},*
- l'écart-type du glissement de vitesse inter-essieux *g_{IE}* du véhicule,
- la médiane du glissement de vitesse inter-essieux *g_{IE}* du véhicule,
- un angle de dérive du véhicule,
- une information transmise par un équipement de contrôle de la dynamique longitudinale et/ou latérale du véhicule.

Selon un mode de réalisation de l'invention, l'étape de calcul de l'entropie *Hₚ* du glissement de vitesse inter-essieux *g_{IE}* du véhicule comprend :
- une première phase de définition d'un intervalle de référence d'une distribution de mesures de glissement de vitesse inter-essieux d'un véhicule lors d'une cession de conduite sur une route à fort niveau d'adhérence ;
- une deuxième phase de réalisation d'une pluralité de mesures de glissement de vitesse inter-essieux *g_{IE}* du véhicule, et de calcul d'une probabilité d'occurrence associée pour différents intervalles dans et hors de l'intervalle de référence;
- une troisième phase de calcul de l'entropie *Hₚ* à partir des probabilités d'occurrence calculées lors de la deuxième phase.

Avantageusement, la première phase de définition d'un intervalle de référence est réalisée sur un véhicule autre que celui sur lequel le procédé est mis en œuvre.

Selon un mode de réalisation avantageux de l'invention, l'ensemble fini de classes de coefficients de friction mobilisables par le véhicule comprend deux classes, et l'algorithme de classification à apprentissage automatique est un algorithme de régression logistique.

Avantageusement, l'algorithme de classification à apprentissage supervisé est configuré pour fournir une probabilité associée à la classe du coefficient de friction mobilisable, ladite probabilité étant prise en compte lors de l'étape d'utilisation de la classe de coefficient de friction mobilisable par un système d'aide à la conduite du véhicule.

Selon un mode de réalisation, le procédé de caractérisation du coefficient de friction mobilisable par un véhicule automobile selon l'invention comprend en outre une étape préliminaire d'entrainement de l'algorithme de classification à apprentissage automatique. Cet entrainement comprend :
- la fourniture d'une pluralité d'ensembles comprenant une entropie de glissement de vitesse inter essieux *g_{IE}* et un ou plusieurs indicateurs représentatifs de l'état du contact entre un ou plusieurs pneumatiques du véhicule et la chaussée,
- la fourniture d'une classe de coefficient de friction mobilisable correspondant à chaque ensemble fourni, et
- la détermination d'un modèle d'algorithme de classification permettant de faire correspondre au mieux les ensembles avec les classes correspondantes.

L'invention porte également sur un véhicule automobile comprenant un dispositif électronique de traitement des données configuré pour mettre en œuvre un procédé de caractérisation du coefficient de friction mobilisable selon un des modes de réalisation de l'invention.

### Brève description des dessins

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig.1] La figure 1 représente des mesures de glissement de vitesse inter-essieux *g_{IE}* réalisées sur un support avec différents niveaux d'adhérence.
[Fig.2] La [Fig.2] est un diagramme synoptique représentant les étapes d'un procédé de caractérisation du coefficient de friction mobilisable par un véhicule automobile selon l'invention.
[Fig.3a] La figure 3a est un exemple de courbe de distribution du glissement de vitesse inter-essieux *g_{IE}*(*t*) d'un véhicule dans des conditions d'adhérence élevées.
[Fig.3b] La figure 3b est un exemple de découpage d'une courbe de distribution de mesures de glissement de vitesse inter-essieux en *L* = 9 classes.
[Fig.4] La [Fig.4] représente schématiquement des étapes mises en œuvre pour réaliser l'apprentissage de l'algorithme de classification utilisé par le procédé selon l'invention.
[Fig.5] La [Fig.5] est un exemple de fonction sigmoïde utilisée lorsque l'algorithme de classification à apprentissage automatique est un algorithme de régression logistique.

### Description des modes de réalisation

Dans la suite de la description, et sauf mention contraire, on utilisera les termes « coefficient de friction », « coefficient de friction pneu-chaussée » ou « adhérence » pour désigner le « coefficient de friction mobilisable par le véhicule ».

L'invention porte sur un procédé de caractérisation du coefficient de friction mobilisable par un véhicule automobile. La finalité du procédé n'est pas d'estimer précisément ce coefficient de friction, mais de déterminer rapidement une classe représentative de sa valeur, éventuellement associée à un niveau de confiance. Il est possible d'utiliser n'importe quel nombre de classes, par exemple deux classes de valeurs (coefficient de friction élevé/faible), trois classes de valeurs (coefficient de friction élevé/moyen/faible), ou plus.

Pour ce faire, le procédé selon l'invention s'appuie sur le traitement de données relatives au glissement de vitesse inter-essieux du véhicule par un algorithme de classification à apprentissage automatique supervisé. Un algorithme de classification est un algorithme permettant de classer des éléments ou des données dans des catégories prédéfinies en fonction de certaines caractéristiques communes. Ces algorithmes sont couramment utilisés dans des domaines tels que la reconnaissance d'images, l'analyse de données, le traitement du langage naturel, la classification de documents, etc.

Des algorithmes de classification sont utilisés pour les ADAS, mais principalement dans le cadre de l'identification d'éléments de contexte de l'environnement du véhicule dans les images fournies par une caméra. L'invention propose d'utiliser un tel algorithme de classification pour identifier le coefficient de friction pneu-chaussée. Une des difficultés rencontrées réside dans le choix des données utilisées comme entrées de l'algorithme de classification, qui doivent être significatives au regard des classes recherchées pour que les résultats de la classification soient pertinents.

Le procédé selon l'invention propose d'utiliser un algorithme de classification à apprentissage supervisé pour déterminer la classe du coefficient de friction mobilisable par le véhicule utilisant l'entropie du glissement de vitesse inter-essieux du véhicule. Dans le mode de réalisation décrit par la suite, deux paramètres sont utilisés en entrée de l'algorithme de classification :
- l'entropie du glissement de vitesse inter-essieux, et
- au moins un autre indicateur représentatif de l'état du contact entre au moins un pneumatique du véhicule et la chaussée, par exemple la moyenne du glissement de vitesse inter-essieux.

L'invention propose de calculer le coefficient de friction pneu-chaussée à partir du glissement de vitesse inter-essieux *g_{IE}* du véhicule (en anglais « *inter- axle speed difference »).* En effet, la variation de vitesse longitudinale entre l'essieu moteur et l'essieu non moteur d'un véhicule automobile diffère en fonction du type de contact pneu-sol. Cette variation est moins importante sur un sol adhérent que sur un sol peu adhérent, à cause du glissement des roues au contact du sol.

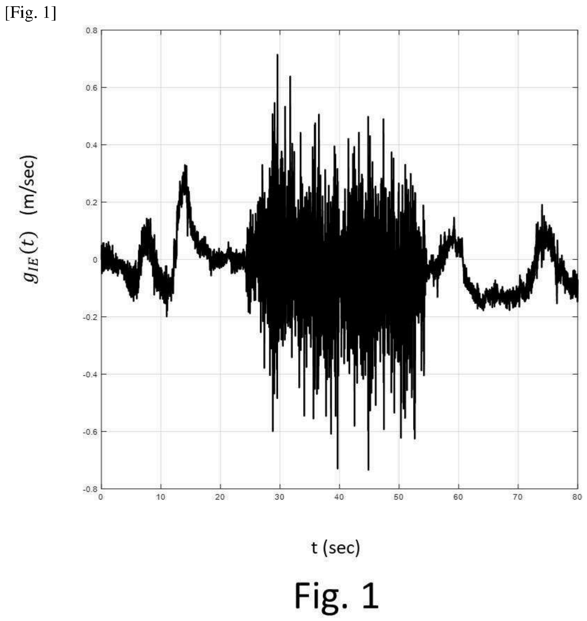

Le glissement de vitesse inter-essieux est défini comme la différence entre la vitesse longitudinale de deux essieux, typiquement l'essieu non moteur et l'essieu moteur pour un véhicule à deux roues motrices, mais également entre l'essieu avant et l'essieu arrière pour un véhicule à quatre roues motrices. La figure 1 représente le glissement de vitesse inter-essieux *g_{IE}*(*t*) mesuré pendant un essai :
- entre 0 et 25 secondes : sur une piste haute adhérence (asphalte sec),
- entre 25 et 55 secondes : sur une piste moyenne adhérence (pavé),
- entre 55 et 80 secondes : sur une piste haute adhérence (asphalte sec).

Comme la [Fig.1] l'illustre, la valeur du glissement de vitesse inter-essieux présente une forte corrélation avec le niveau d'adhérence de la route.

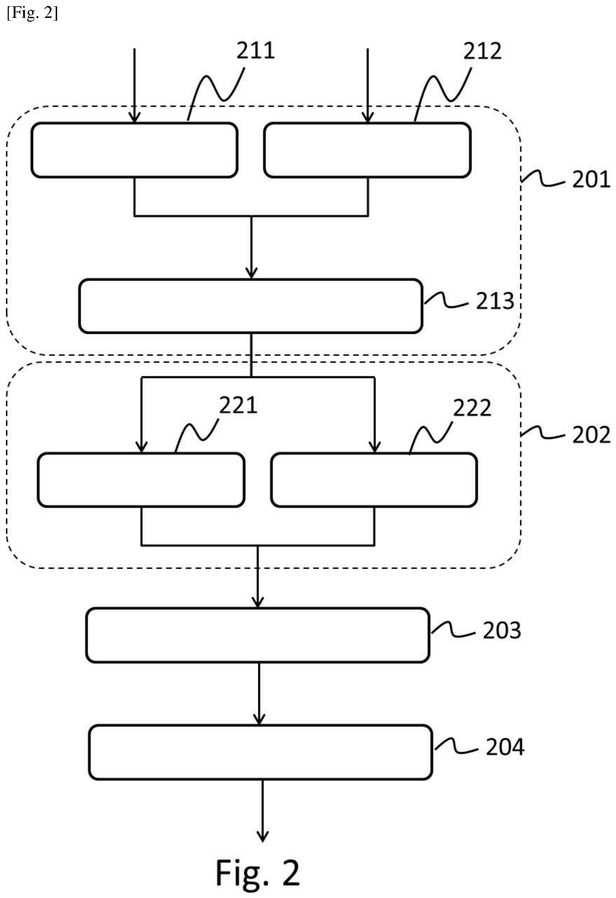

La [Fig.2] représente sous la forme d'un diagramme synoptique les étapes d'un procédé de caractérisation du coefficient de friction mobilisable par un véhicule automobile selon l'invention.

Le procédé comprend une première étape 201 de calcul d'un glissement de vitesse inter-essieux *g_{IE}* du véhicule. Cette étape peut être décomposée en trois sous-étapes :
- une sous-étape 211 de calcul de la vitesse longitudinale d'un premier essieu du véhicule ;
- une sous-étape 212 de calcul de la vitesse longitudinale d'un deuxième essieu du véhicule ;
- une sous-étape 213 de calcul du glissement de vitesse inter-essieux.

Typiquement, le premier essieu est l'essieu moteur du véhicule, ou dans le cas d'un véhicule à quatre roues motrices, l'essieu sur lequel le plus de puissance est appliquée, mais l'invention fonctionne quel que soit l'essieu sélectionné comme premier et deuxième essieu.

La vitesse longitudinale de chaque essieu peut être obtenue aux sous-étapes 211 et 212 de différentes manières, par exemple :
- par une mesure directe de la vitesse de rotation de l'essieu, qui peut être rapportée à la vitesse longitudinale de l'essieu en tenant compte du diamètre des roues,
- par une mesure de la vitesse de rotation des roues de l'essieu, qui peut être rapportée à la vitesse de déplacement longitudinal de l'essieu en tenant compte de la vitesse de lacet du véhicule et du diamètre des roues,
- par un algorithme d'apprentissage automatique prenant comme entrées la vitesse de rotation d'une ou plusieurs roues de l'essieu et la vitesse de lacet du véhicule.

Calculer le glissement de vitesse sur la vitesse longitudinale des essieux plutôt que sur la vitesse de rotation des roues présente l'avantage de ce que les mesures ne sont pas affectées par le déplacement latéral du véhicule. En effet, en ligne droite, la vitesse des roues pourrait être directement utilisée pour calculer la vitesse longitudinale de l'essieu, mais ce n'est pas le cas en virage : il faudrait alors également considérer la vitesse de lacet du véhicule pour pouvoir mettre en œuvre le procédé selon l'invention, ce qui serait potentiellement moins précis.

Le calcul du glissement de vitesse inter-essieux *g_{IE}* de la sous-étape 213 se fait en calculant la différence entre les vitesses longitudinales des essieux calculées aux sous-étapes précédentes :${g}_{IE} \left(t\right) = {Vitesse}_{Premier Essieu} \left(t\right) - {Vitesse}_{Deuxième Essieu} \left(t\right) .$

Le procédé selon l'invention comprend ensuite une deuxième étape 202 de calcul de l'entropie du glissement de vitesse inter-essieux *g_{IE}* et de calcul d'au moins un indicateur représentatif de l'état du contact pneu/chaussée.

Cette étape 202 comprend une sous-étape 221 de calcul de l'entropie *Hₚ* du glissement de vitesse inter-essieux *g_{IE}.*

Selon le deuxième principe de la thermodynamique, l'entropie est un indicateur qui quantifie le désordre interne à un système. Dans le cas de l'invention, l'entropie du glissement de vitesse inter-essieux quantifie le niveau de désordre interne du système constitué des deux essieux du véhicule. Lorsque le système est complètement stable (pas de désordre), l'entropie est faible voire nulle. En présence de variations (désordre ou instabilité à l'intérieur du système), l'entropie augmente considérablement. L'idée de l'invention est d'exploiter ce comportement pour traduire les instabilités ou désordres introduits par le contact pneu-chaussée sur les vitesses des essieux moteur et non moteur.

L'entropie du glissement de vitesse inter-essieux est considérée ici pour réaliser l'estimation du coefficient de friction car cet indicateur est sensible à des variations même minimes, ce qui offre des indications sur les changements d'états même brefs et permet la détection rapide de l'intervalle de friction mobilisable par le véhicule.

Le calcul de l'entropie *Hₚ* peut par exemple s'effectuer selon les trois phases décrites ci-après.

La première phase du calcul de l'entropie *Hₚ* comprend la mesure de la distribution de N valeurs glissement de vitesse inter-essieux g*_{IE}*(*t*) acquises lors d'une cession de conduite sur une route de haute adhérence, avec par exemple N = 100.

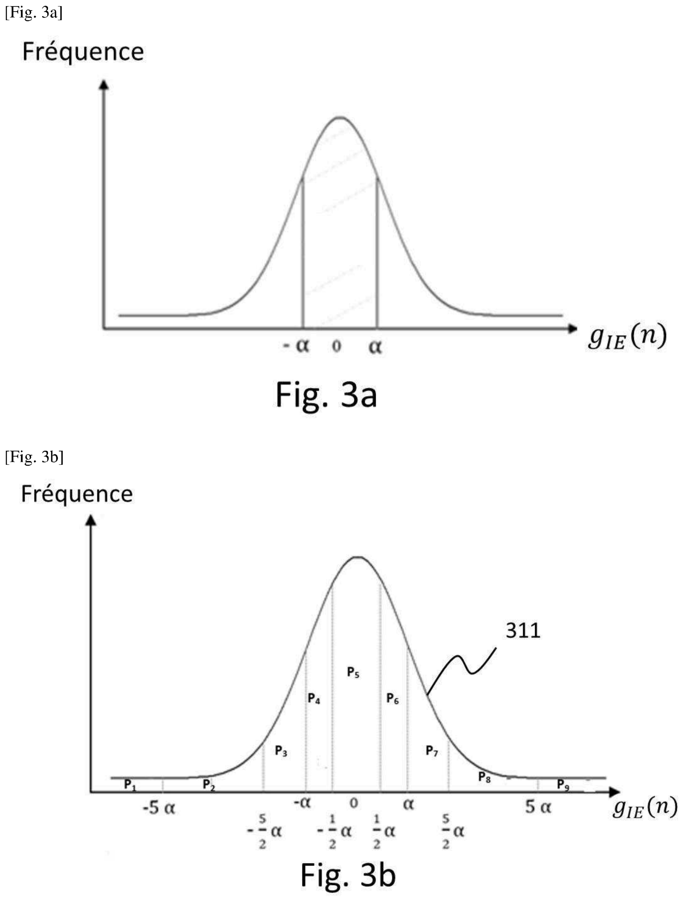

Cette première sous-étape permet de construire la courbe 301 de distribution du glissement de vitesse inter-essieux *g_{IE}*(*t*) sur une route à haute adhérence, telle que représentée à la figure 3a. A partir de cette courbe, il est possible de déterminer un intervalle de référence 302 de taille 2α centré autour du pic de la courbe, et qui contient un pourcentage significatif de mesures, par exemple 90%.

Le nombre N de mesures (ici N = 100) et le pourcentage significatif de mesures choisi (ici 90%) sont donnés à titre d'exemple seulement. Ils peuvent être modifiés afin d'ajuster le temps de réponse et le taux de détection souhaité. Par exemple, dans les cas où il n'y a pas de contrainte de détection rapide, la valeur N peut être supérieure à 100. Et pour n'être sensible qu'à des variations importantes des mesures de glissement de vitesse inter essieux *g_{IE}*(*t*), le pourcentage significatif de mesures considéré peut être augmenté (par exemple à 95%).

Cette première phase de mesure de la distribution de N de mesures du glissement de vitesse inter-essieux *g_{IE}* sur une route à haute adhérence est réalisée en amont de la mise en œuvre du procédé de caractérisation du coefficient de friction mobilisable par un véhicule automobile selon l'invention.

Le résultat obtenu à cette étape n'est pas spécifique au véhicule utilisé pour le mesurer : la valeur *α* dimensionnant l'intervalle de référence peut être déterminée à partir de mesures faites sur un véhicule de référence, et utilisé pour la mise en œuvre du procédé selon l'invention sur tous les véhicules comparables au véhicule de référence, c'est-à-dire au minimum les véhicules de la même gamme.

Les phases suivantes de la mesure d'entropie du glissement de vitesse inter-essieux sont réalisées sur le véhicule, au fur et à mesure des acquisitions lors de la mise en œuvre du procédé de caractérisation du coefficient de friction mobilisable selon l'invention.

La deuxième phase de calcul de l'entropie *Hₚ* comprend la réalisation de *M* mesures du glissement de vitesse inter-essieux *g_{IE}*(*t*) sur une fenêtre glissante, avec par exemple M = 100, et le calcul de la distribution de ces mesures.

Dans le cas où le glissement de vitesse inter-essieux est calculé à une fréquence de 100Hz, considérer M = 100 échantillons revient à calculer une moyenne glissante sur une fenêtre de 1 seconde, ce qui permet une détection rapide en cas de changement d'adhérence de la route.

On considère alors un nombre *L* de classes, avec *L* impair et supérieur ou égal à 3, positionnées symétriquement par rapport au maximum de la courbe de distribution. Les classes sont définies de sorte qu'il y ait des classes positionnées en dehors de l'intervalle de référence [ - *α* ; *α*] identifié lors de la première sous-étape, et des classes positionnées à l'intérieur de cet intervalle de référence. On calcule alors la fréquence d'apparition (ou probabilité d'occurrence) *P*₁ à *P*₉ des mesures pour chaque classe, en divisant le nombre d'échantillons de la classe par M, avec M le nombre de mesures acquis sur la fenêtre glissante.

Par exemple, et comme représenté à la figure 3b, on peut diviser la courbe de distribution 311 en *L* = 9 classes symétriques par rapport au pic de la courbe de distribution, avec des bornes d'intervalles aux positions $\pm \frac{α}{2} , \pm α , \pm \frac{5 α}{2}$, ± 5*α* et ±∞. Pour chaque classe, la probabilité d'occurrence correspondante *P*₁ à *P*₉ est calculée, ${\sum }_{i = 1}^{9} {P}_{i} = 1$.

La troisième phase de calcul de l'entropie *Hₚ* comprend le calcul de la valeur de l'entropie *Hₚ* selon la formule :
${H}_{p} \left(t\right) = - {\sum }_{i = 1}^{L} {P}_{i} log \left({P}_{i}\right)$

Lorsque les conditions d'adhérence sont moins élevées, les mesures de glissement inter-essieux *g_{IE}*(*t*) présentent plus de dispersion que lorsque les conditions d'adhérence sont élevées. Les valeurs des probabilités des classes situées en dehors de l'intervalle [ *α* ; *α*], c'est-à-dire dans le cas à 9 intervalles donné comme exemple les probabilités *P*₁, *P*₂, *P*₈ et *P*₉, augmentent. Ce phénome augmente la valeur de l'entropie *Hₚ*(*t*). Dans les conditions de roulage en haute adhérence, les échantillons se regroupent plus dans les classes internes (*P*₅ en particulier puis *P*₄ et *P*₆). La valeur de l'entropie *Hₚ*(*t*) diminue alors considérablement.

L'étape 202 comprend également une sous-étape 222 de calcul d'au moins un indicateur représentatif de l'état du contact pneu-chaussée.

Différents indicateurs sont possibles, par exemple :
- la moyenne *Mg_{IE},* l'écart type ou la médiane du glissement de vitesse inter-essieux,
- l'angle de dérive du véhicule (en anglais « drift angle »), qui est l'angle qui est séparant la direction des roues directrices de la direction prise par le véhicule,
- une information transmise par un équipement de contrôle de la dynamique longitudinale et/ou latérale du véhicule. On peut par exemple utiliser à cet effet les informations de blocage des roues transmises par l'ABS (de l'anglais « Antilock Bracking System), les informations d'antipatinage transmises par l'ASR (en anglais « Anti-Slip Regulation »), et/ou les informations de contrôle transmises par l'AYC (en anglais « Active Yaw Control », qui est un système de contrôle actif de la stabilité du véhicule),
- tout autre indicateur renseignant sur la position du contact pneu/chaussée dans l'ellipse de friction des pneumatiques.

A titre d'illustration, le calcul de la moyenne *Mg_{IE}*(*t*) du glissement de vitesse inter-essieux peut être réalisé en considérant une moyenne glissante sur *N* = 100 échantillons, avec :
${Mg}_{IE} \left(t\right) = \frac{1}{N} {\sum }_{i = 1}^{N} \left|{g}_{IE}\left(i\right)\right|$

Dans l'exemple, la moyenne est considérée en valeur absolue pour obtenir un indicateur positif.

Enfin, le procédé de caractérisation du coefficient de friction mobilisable par un véhicule automobile selon l'invention comprend une étape 203 de classification du coefficient de friction mobilisable par le véhicule automobile parmi un ensemble fini de classes de coefficients de friction mobilisables, par la mise en œuvre d'un algorithme de classification à apprentissage automatique (en anglais *« machine learning classification algorithm* ») entrainé à cet effet prenant comme entrées l'entropie *Hₚ*(*t*) calculée lors de la sous-étape 221 et le ou les indicateurs représentatif de l'état du contact pneu-chaussée calculé(s) lors de la sous-étape 222.

L'utilisation d'un algorithme de classification à apprentissage automatique permet de s'appuyer sur une pluralité d'entrées pour déterminer la classe du coefficient de friction mobilisable par le véhicule. L'utilisation de l'entropie du glissement de vitesse inter-essieux comme entrée de l'algorithme de classification plutôt que des mesures directes de glissement de vitesse inter-essieux présente deux avantages :
- cet indicateur fait ressortir les variations ou désordres dans un signal, en s'appuyant sur la distribution en fréquence d'occurrence des échantillons du signal dans *L* classes : c'est donc un marqueur particulièrement significatif pour la quantification du coefficient de friction,
- cela réduit le nombre d'entrées de l'algorithme de classification, et donc sa complexité et son coût en calculs.

Associer l'entropie avec un autre indicateur représentatif de l'état du contact pneu/ chaussé augmente la précision de l'algorithme de classification. En effet, chacun des indicateurs décrits renseigne de manière plus ou moins précise sur le coefficient de friction du véhicule. Cependant, lorsque pris en combinaison avec l'entropie du glissement de vitesse inter-essieux, cette information devient particulièrement pertinente, et l'algorithme de classification peut alors tirer profit de la conjonction entre ces deux (ou plus) entrées pour déterminer très précisément la classe du coefficient de friction.

L'algorithme de classification à apprentissage automatique utilisé peut par exemple être de type réseau de neurone, régression logistique, arbre de décision, ou toute autre approche de classification faisant intervenir des techniques d'apprentissage automatique ou d'apprentissage supervisé.

Par exemple, la classification peut être faite pour trois classes :
- Faible adhérence,
- Moyenne adhérence,
- Forte adhérence.

De manière alternative, des classes intermédiaires peuvent être ajoutées.

Dans le cas d'une classification du coefficient de friction mobilisable selon deux classes seulement, l'algorithme de classification à apprentissage automatique utilisé peut être un algorithme de régression logistique, car c'est l'une des meilleures méthodes pour la classification binaire, avec une transition douce approximée par une fonction sigmoïde entre les deux classes.

L'algorithme utilisé peut alors être le suivant :
$Y \left({H}_{p}, {Mg}_{IE}\right) = \frac{1}{1 - {e}^{- \left({β}_{0}+{β}_{1}{H}_{p}+{β}_{2}{Mg}_{IE}\right)}}$
avec *β*₀, *β*₁ et *β*₂ les coefficients du modèle, établis lors d'une phase d'apprentissage, détaillée dans la suite de la description.

Enfin, le procédé selon l'invention comprend enfin une quatrième étape 204 d'utilisation de la classe de coefficient de friction mobilisable calculée lors de l'étape 203 par un système d'aide à la conduite du véhicule, par exemple pour un système ADAS mobilisant les actionneurs de freinage, d'accélération, ou de braquage pour du suivi de trajectoire ou du centrage dans la ligne, pour un ACC adaptatif afin d'ajuster les distances de sécurité avec le véhicule précédent, pour la détection de collision. Il peut s'agir aussi d'un système de contrôle moteur qui ajuste la consigne du couple ou la sollicitation de motricité maximale du moteur en fonction de la classe d'adhérence, etc.

L'entrainement de l'algorithme de classification utilisé lors de l'étape 203 se fait hors ligne (c'est-à-dire en dehors du véhicule) et de manière supervisée. Il consiste à fournir à l'algorithme de classification un ensemble de données d'entrée et de sortie connues, dites données d'apprentissage, pour qu'il apprenne à associer les entrées aux sorties correspondantes en créant un modèle ou une fonction mathématique utilisable lors de la phase d'inférence. Les données d'apprentissage peuvent provenir de mesures réalisées sur un véhicule de référence, ou d'une base de données de roulage.

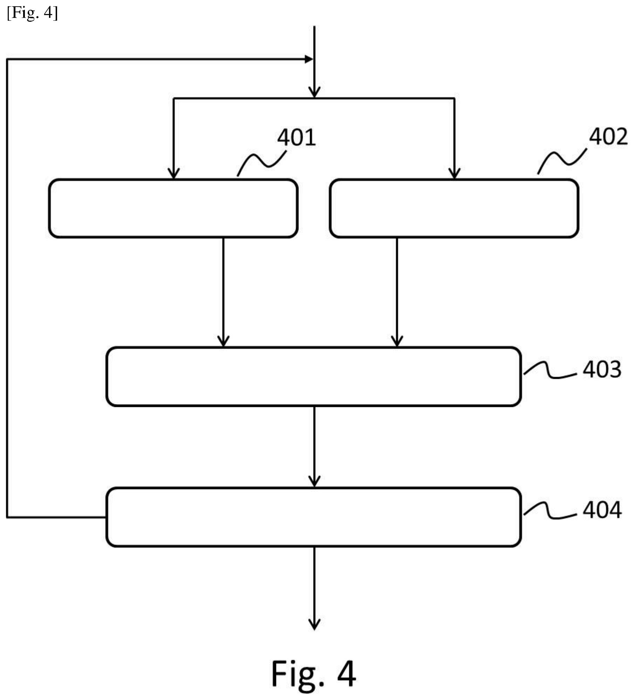

La [Fig.4] représente schématiquement des étapes mises en œuvre pour réaliser l'apprentissage de l'algorithme de classification utilisé dans l'étape 203, données ici à titre d'exemple. L'apprentissage se fait en considérant des données d'entrées/ sorties de l'algorithme du même type que celles de la phase d'inférence de l'étape de classification 203.

L'apprentissage peut comprendre les étapes de :
- collecte 401 de données d'entrée, comprenant au minimum *L* jeux de mesures correspondantes de l'entropie *Hₚ*(*t*) du glissement de vitesse inter-essieux *g_{IE}* et du ou des indicateurs représentatifs de l'état du contact pneu/ chaussée. Les échantillons collectés doivent être suffisamment nombreux et représentatifs de cas d'applications variés pour permettre à l'algorithme de classification d'offrir des performances satisfaisantes quelles que soient ses conditions de mise en œuvre. Par exemple, on utilisera au minimum *L* = 1000 jeux de mesures faites dans des conditions variées d'adhérence du contact pneu-chaussée, de conditions météorologiques, d'état des pneus, d'état de la chaussée et de dynamique du véhicule ;
- association 402 d'une classe de coefficient de friction mobilisable par le véhicule à chaque jeu de mesures. Cette association (ou étiquetage) consiste à attribuer une classe parmi l'ensemble de classes de sorties recherchées à chaque jeu de mesures. Elle peut être mise en œuvre, par exemple :
   - par appréciation du conducteur,
   - par des mesures directes du coefficient d'adhérence de la chaussée,
   - par approximation à partir des conditions climatiques, de l'état du revêtement de la chaussée, et/ou de l'état des pneumatiques du véhicule ;
   - etc...
- apprentissage 403 de l'algorithme de classification à apprentissage automatique supervisé. Cette étape consiste à lui fournir les jeux de données collectées lors de l'étape 401 et les classes correspondantes associées lors de l'étape 402, qui constituent les données d'apprentissage, pour qu'il affine les coefficients de son modèle de classification ;
- validation 404 de l'algorithme de classification entrainé obtenu, en l'expérimentant sur de nouvelles données d'entrées, et en vérifiant si les sorties de l'algorithme correspondent aux classes attendues. Un taux de précision de prédiction par classe d'entrée peut alors être mesuré. Si ce taux de précision est supérieur à un seuil donné pour chacune des classes considérées, par exemple 95% de précision, alors l'algorithme entrainé peut être déployé dans les véhicules pour la mise en œuvre du procédé selon l'invention. Sinon, la précision de l'algorithme est insuffisante, et l'apprentissage doit être repris à partir de nouvelles données d'apprentissage.

L'algorithme de classification ainsi entrainé peut être utilisé pour mettre en œuvre le procédé de caractérisation du coefficient de friction mobilisable par le véhicule automobile selon l'invention sur l'ensemble des véhicules de la gamme du véhicule utilisé pour collecter les données d'apprentissage, ainsi que sur les véhicules comparables. On entend par comparables le fait que les caractéristiques des véhicules, en particulier leur masse, leur encombrement et la dimension des pneumatiques, soient du même ordre de grandeur.

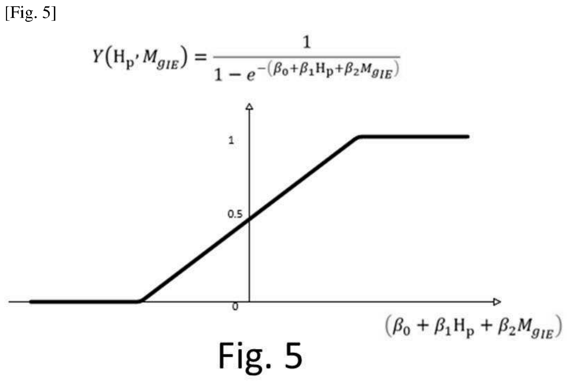

La figure 5 donne un exemple de fonction sigmoïde utilisée lorsque l'algorithme de classification à apprentissage automatique est un algorithme de régression logistique. Les valeurs de sortie *Y* sont comprises entre 0 pour la première classe *I*₁, et 1 pour la deuxième classe *I*₂.

Une fois les coefficients *β*₀, *β*₁ et *β*₂ calculés par apprentissage, ce modèle peut être embarqué dans un véhicule pour mettre en œuvre un procédé de caractérisation du coefficient de friction mobilisable par un véhicule automobile selon un mode de réalisation de l'invention. La sortie de la fonction sigmoïde est une valeur, qui doit être comparée avec un seuil pour déterminer la classe à laquelle le coefficient de friction mobilisable appartient.

En prenant 0.5 comme valeur de seuil, on a alors *Y* (*Hₚ, Mg_{IE}*) *< Seuil* pour la classe *I*₁ et *Y* (*Hₚ, Mg_{IE}*) *≥ Seuil* pour la classe *I*₂.

Ainsi, selon un mode de réalisation particulier du procédé de caractérisation du coefficient de friction selon l'invention, l'algorithme de classification à apprentissage supervisé mis en œuvre lors de l'étape 203 peut être configuré pour fournir une probabilité d'appartenance à chaque classe. Cette probabilité constitue une indication sur la fiabilité de la détermination, qui peut être prise en compte pour adapter l'étape 204 d'utilisation de la classe de coefficient de friction mobilisable calculée par un système d'aide à la conduite du véhicule. Dans l'exemple ci-dessus, les probabilités *P*₁ et *P*₂ d'appartenance aux classes *I*₁ et *I*₂ sont *P*₁= 1 - *Y*(*Hₚ, Mg_{IE}*) et *P*₂ = *Y*(*Hₚ, Mg_{IE}*).

L'invention porte sur un procédé de caractérisation du coefficient de friction mobilisable par un véhicule automobile mettant en œuvre un algorithme de classification à apprentissage automatique supervisé prenant a minima comme entrées l'entropie *Hₚ*(*t*) du glissement de vitesse inter-essieux *g_{IE}* et un ou plusieurs indicateurs représentatifs de l'état du contact entre un ou plusieurs pneumatiques du véhicule et la chaussée. Ce procédé est destiné à être implémenté à bord d'un véhicule afin de lui permettre, par exemple à intervalles temporels réguliers ou de manière continue, d'effectuer une estimation du coefficient de friction qu'il peut mobiliser.

Le rythme auquel est réalisée l'étape 204 d'utilisation de la classe de coefficient de friction mobilisable par le véhicule automobile par un système d'aide à la conduite est indépendant du rythme des étapes qui la précèdent.

Les intérêts principaux du procédé de classification selon l'invention sont :
- il permet de détecter rapidement des intervalles du coefficient de friction mobilisable, à partir en particulier de l'entropie du glissement de vitesse inter-essieux *g_{IE}* du véhicule,
- il peut être mis en œuvre à partir de signaux disponibles sur le bus CAN du véhicule : il n'est donc pas nécessaire d'installer des capteurs spécifiques,
- il permet d'améliorer la sécurité pour le véhicule et ses passagers, qu'il s'agisse d'un véhicule autonome ou d'un véhicule équipé de systèmes d'aide à la conduite,
- il permet de sélectionner les actionneurs du véhicule automobile les plus adaptés au contexte, et d'avoir ainsi une meilleure gestion de la puissance motrice de ces actionneurs, grâce à la connaissance de la classe coefficient de friction mobilisable.

L'invention porte également sur un véhicule comprenant un dispositif électronique de traitement des données, par exemple un calculateur ou un microprocesseur, configuré pour mettre en œuvre le procédé de caractérisation du coefficient de friction mobilisable par un véhicule automobile décrit précédemment, à partir de données acquises par des capteurs du véhicule.

## Revendications

1. Procédé de caractérisation du coefficient de friction mobilisable par un véhicule automobile, le procédé comprenant :
- une étape (201) de calcul d'un glissement de vitesse inter-essieux *g_{IE}* dudit véhicule,
- une étape (221) de calcul de l'entropie *Hₚ* dudit glissement de vitesse inter-essieux *g_{IE}* du véhicule,
- une étape (222) de calcul d'un ou plusieurs indicateurs représentatifs de l'état du contact entre au moins un pneumatique du véhicule et la chaussée,
- une étape (203) de classification du coefficient de friction mobilisable par le véhicule automobile parmi un ensemble fini de classes de coefficients de friction mobilisables, par la mise en œuvre d'un algorithme de classification à apprentissage automatique entrainé à cet effet prenant comme entrées ladite entropie *Hₚ* du glissement de vitesse inter-essieux *g_{IE}* du véhicule et le ou lesdits indicateurs représentatifs de l'état du contact entre au moins un pneumatique du véhicule et la chaussée,
- une étape (204) d'utilisation de la classe de coefficient de friction mobilisable par le véhicule automobile calculée lors de l'étape précédente par un système d'aide à la conduite du véhicule automobile.

2. Procédé de caractérisation du coefficient de friction mobilisable par un véhicule automobile selon la revendication 1, dans lequel l'étape (201) de calcul d'un glissement de vitesse inter-essieux *g_{IE}* du véhicule comprend :
- une sous-étape (211) de calcul d'une vitesse longitudinale d'un premier essieu du véhicule,
- une sous-étape (212) de calcul d'une vitesse longitudinale d'un deuxième essieu du véhicule,
- une sous-étape (213) de calcul du glissement de vitesse inter-essieux *g_{IE}* en calculant la différence entre les vitesses longitudinales du premier et du deuxième essieu du véhicule.

3. Procédé de caractérisation du coefficient de friction mobilisable par un véhicule automobile selon l'une des revendications précédentes, dans lequel au moins un du ou des indicateurs représentatifs de l'état du contact entre au moins un pneumatique du véhicule et la chaussée est choisi parmi :
- une moyenne du glissement de vitesse inter-essieux *g_{IE}* du véhicule,
- un écart-type du glissement de vitesse inter-essieux *g_{IE}* du véhicule,
- une médiane du glissement de vitesse inter-essieux *g_{IE}* du véhicule,
- un angle de dérive du véhicule,
- une information transmise par un équipement de contrôle de la dynamique longitudinale et/ou latérale du véhicule.

4. Procédé de caractérisation du coefficient de friction mobilisable par un véhicule automobile selon l'une des revendications précédentes, dans lequel l'étape (222) de calcul de l'entropie *Hₚ* du glissement de vitesse inter-essieux *g_{IE}* du véhicule comprend :
- une première phase de définition d'un intervalle de référence d'une distribution de mesures de glissement de vitesse inter-essieux d'un véhicule lors d'une cession de conduite sur une route à niveau d'adhérence élevé ;
- une deuxième phase de réalisation d'une pluralité de mesures de glissement de vitesse inter-essieux *g_{IE}* du véhicule, et de calcul d'une probabilité d'occurrence pour différents intervalles situés dans et hors de l'intervalle de référence;
- une troisième phase de calcul de l'entropie *Hₚ* à partir desdites probabilités d'occurrence.

5. Procédé de caractérisation du coefficient de friction mobilisable par un véhicule automobile selon la revendication précédente, dans lequel la première phase de définition d'un intervalle de référence est réalisée sur un véhicule de référence distinct de celui sur lequel le procédé est mis en œuvre.

6. Procédé de caractérisation du coefficient de friction mobilisable par un véhicule automobile selon l'une des revendications précédentes, dans lequel l'ensemble fini de classes de coefficients de friction mobilisables par le véhicule comprend deux classes, et où l'algorithme de classification à apprentissage automatique est un algorithme de régression logistique.

7. Procédé de caractérisation du coefficient de friction mobilisable par un véhicule automobile selon l'une des revendications précédentes, dans lequel l'algorithme de classification à apprentissage supervisé est en outre configuré pour fournir une probabilité associée à la classe du coefficient de friction mobilisable par le véhicule automobile, ladite probabilité étant prise en compte lors de l'étape (204) d'utilisation de la classe de coefficient de friction mobilisable par un système d'aide à la conduite du véhicule.

8. Procédé de caractérisation du coefficient de friction mobilisable par un véhicule automobile selon l'une des revendications précédentes, comprenant en outre une étape préliminaire d'entrainement de l'algorithme de classification à apprentissage automatique, l'entrainement comprenant :
- la fourniture d'une pluralité d'ensembles comprenant une entropie de glissement de vitesse inter essieux *g_{IE}* et un ou plusieurs indicateurs représentatifs de l'état du contact entre au moins un pneumatique du véhicule et la chaussée,
- la fourniture d'une classe de coefficient de friction mobilisable correspondant à chaque ensemble fourni, et
- la détermination d'un modèle d'algorithme de classification permettant de faire correspondre au mieux les ensembles avec les classes correspondantes.

9. Véhicule automobile comprenant un dispositif électronique de traitement des données configuré pour mettre en œuvre un procédé de caractérisation du coefficient de friction mobilisable selon l'une des revendications 1 à 8.
